# EUROPEAN PATENT SPECIFICATION

(11) **EP 2 957 170 B1**
(45) Date of publication and mention of the grant of the patent: **04.01.2017**
(21) Application number: 15172126.3
(22) Date of filing: 15.06.2015
(51) Int. Cl.: A01K 39/01

(54) **LANTERN SHAPED BIRD FEEDER**
LATERNENFÖRMIGER VOGELFUTTERSPENDER
DISPOSITIF D'ALIMENTATION D'OISEAUX EN FORME DE LANTERNE

(30) Priority: 20.06.2014 CA 2854917
(43) Date of publication of application: 23.12.2015
(73) Proprietor: PLC Patents and Trademarks Inc., Lac Brome, Quebec J0E 1V0 (CA)
(72) Inventor: Cote, Paul, Lac Brome, Québec J0E 1V0 (CA)
(74) Representative: Glück Kritzenberger Patentanwälte PartGmbB

(56) References cited:
- US-A1- 2005 263 083
- US-B2- 8 230 809

## Description

### FIELD OF THE INVENTION

The present invention relates to squirrel proof bird feeders.

### BACKGROUND OF THE INVENTION

The feeding of birds by means of bird feeders is well known in the art. The bird feeders can range from simple tube type feeders to those having designs to permit the exclusion of heavier birds and/or marauders such as squirrels. Exemplary of the latter type of bird feeders are those shown in U.S. Patents 6,543,384, 7,739,982 and 8,230,809.

Although the above mentioned bird feeders work as described therein, one of the problems associated with such bird feeders is the calibration of the spring mechanism. The spring mechanism is the means by which a shroud is moved to permit or deny access to the contents of the seed container. While some of the structures permit adjustment of the spring tension, others are fixed at a predetermined level.

As shown in some of these patents, a weight activated closure system is based on a tension spring system. The tension spring holds the shroud in an open position and is biased against the seed container assembly. Inherent in this design is the need for top and bottom stops to hold the spring under tension. The spring is tensioned and held in tension when the bird feeder components are assembled and fastened.

### SUMMARY OF THE INVENTION

It is an object of the present invention to provide a spring cartridge assembly wherein the tension spring is incorporated in an assembly independent of the bird feeder components.

According to one aspect of the present invention, there is provided a bird feeder comprising a seed container, a center tube within the seed container, a seed tray, a cartridge spring assembly comprising a center rod, a spring extending about the center rod, the spring assembly fitting within the center tube and the center rod extending outwardly at a lower end thereof, a cover, the cover having an aperture, the center tube passing through the aperture, a hanger, the hanger being engaged with an upper portion of the center tube to thereby retain the cover in position, a shroud having a perch member, a central opening in the shroud to permit a lower end of the center rod to pass therethrough, and a retainer secured to the lower end of the spring assembly to retain the shroud in position.

The cartridge system permits the calibration of the spring system before assembly which increases production efficiency and reduces production costs. Rather than calibrating after assembly, which may require disassembly and reassembly to correct non conforming springs, the cartridge system permits the calibration before assembly. This also permits the consumer to replace defective springs as the replacement cartridge assembly is replaced as a unit.

### BRIEF DESCRIPTION OF THE DRAWINGS

Having thus generally described the invention, reference will be made to the accompanying drawings illustrating an embodiment thereof, in which:

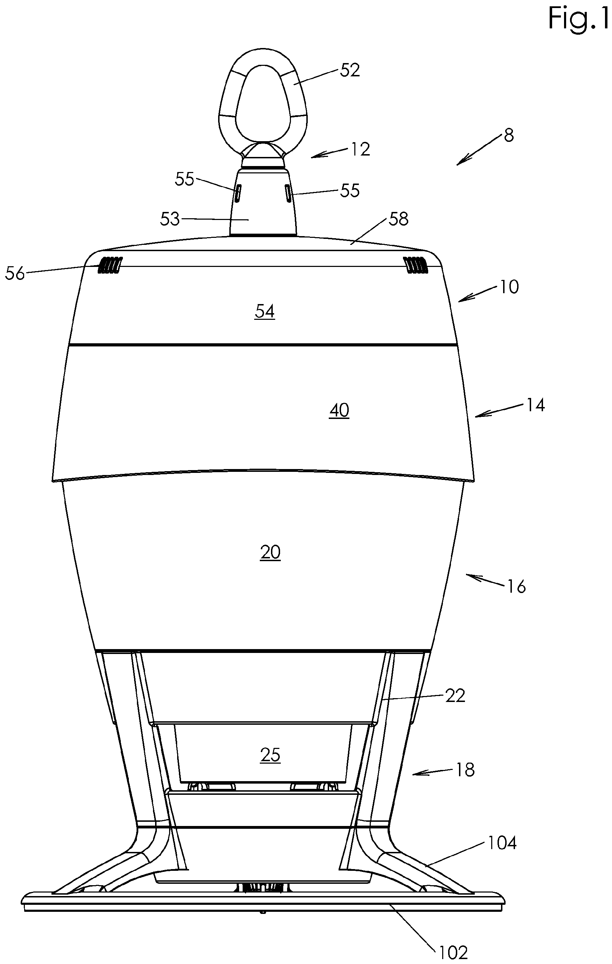

Figure 1 is a side elevational view of a bird feeder according to an embodiment of the present invention;

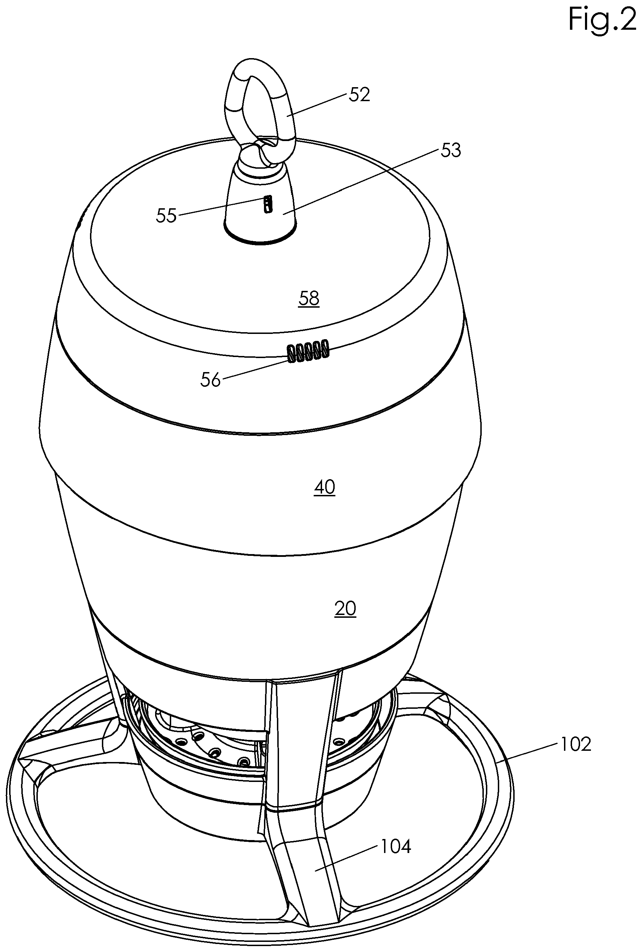

Figure 2 is a perspective view thereof;

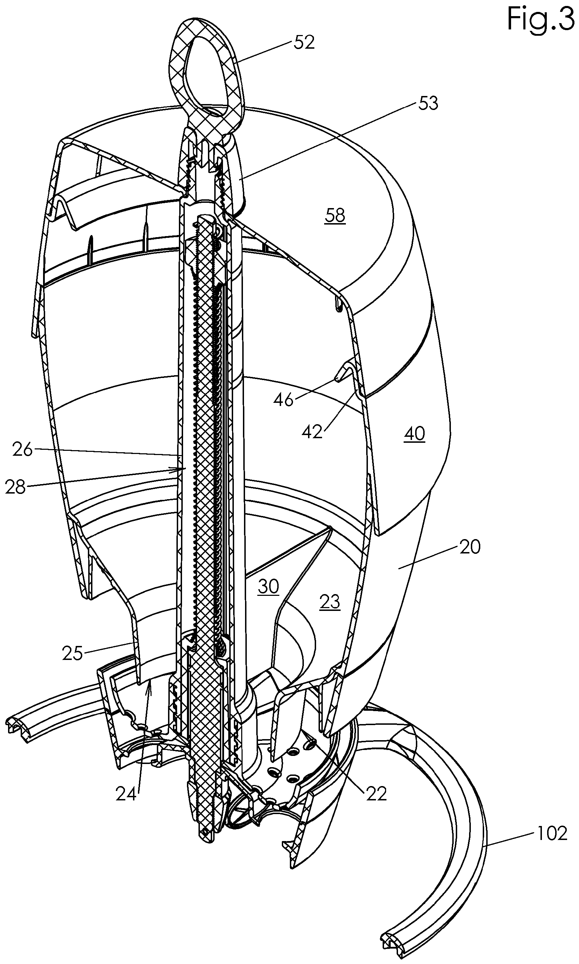

Figure 3 is a sectional view thereof;

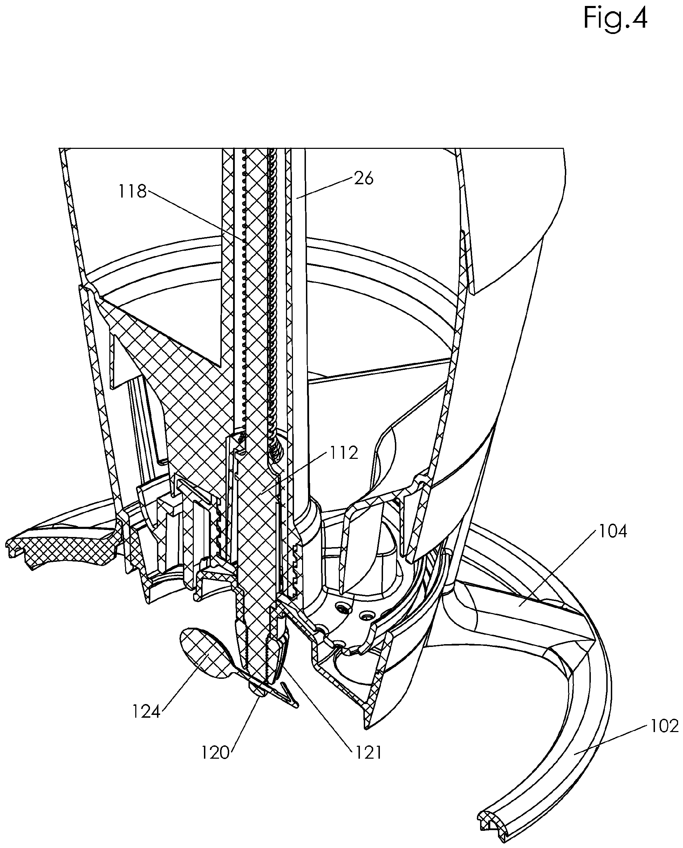

Figure 4 is an enlarged view of the bottom portion of the bird feeder in a sectional view;

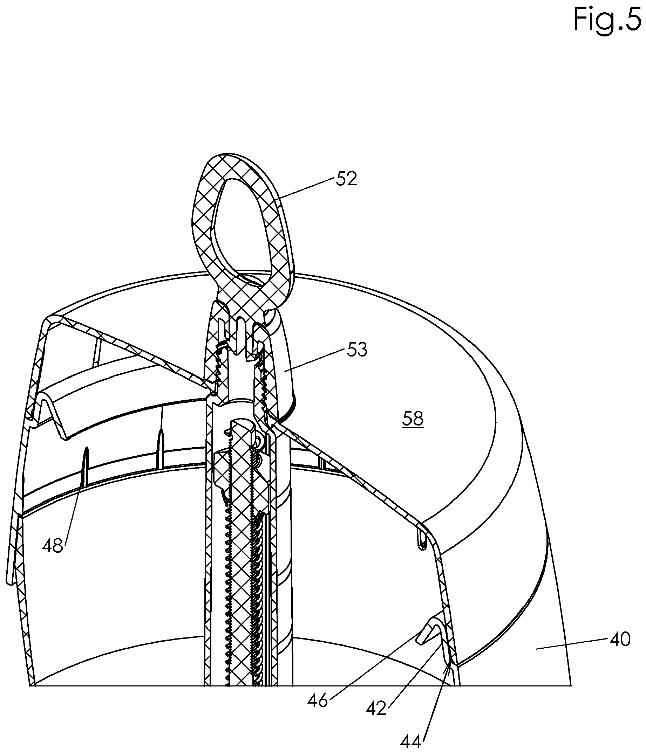

Figure 5 is an enlarged sectional view of the top portion of the bird feeder;

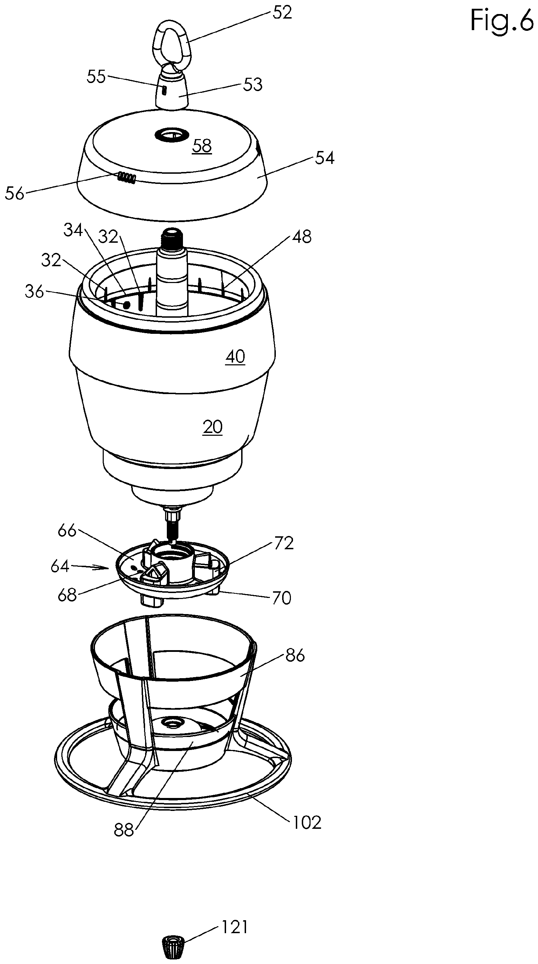

Figure 6 is an exploded view of the bird feeder;

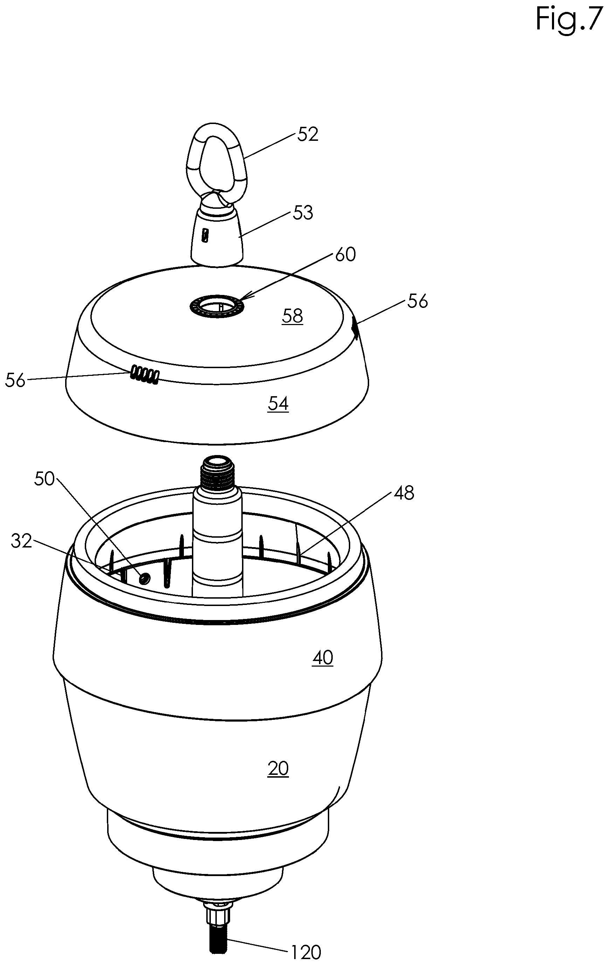

Figure 7 is a partially exploded view illustrating the hanger and cover of the bird feeder;

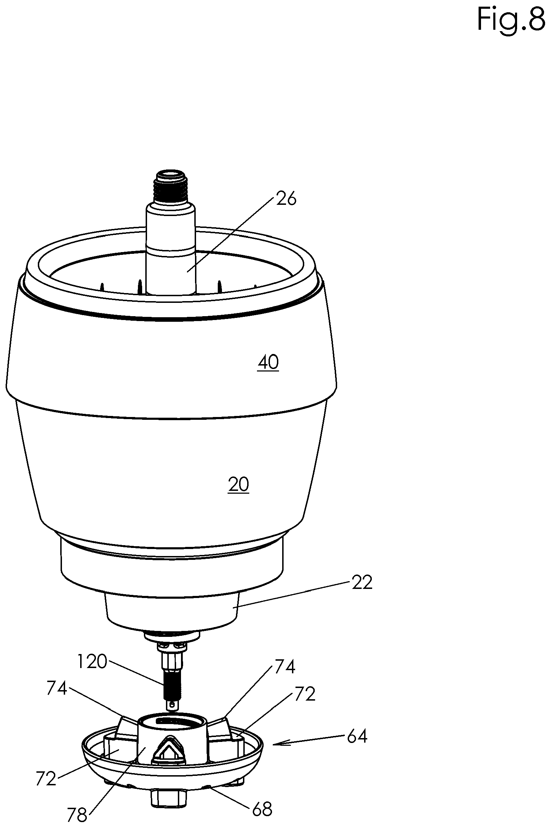

Figure 8 is a perspective partially exploded view of the seed container and seed tray;

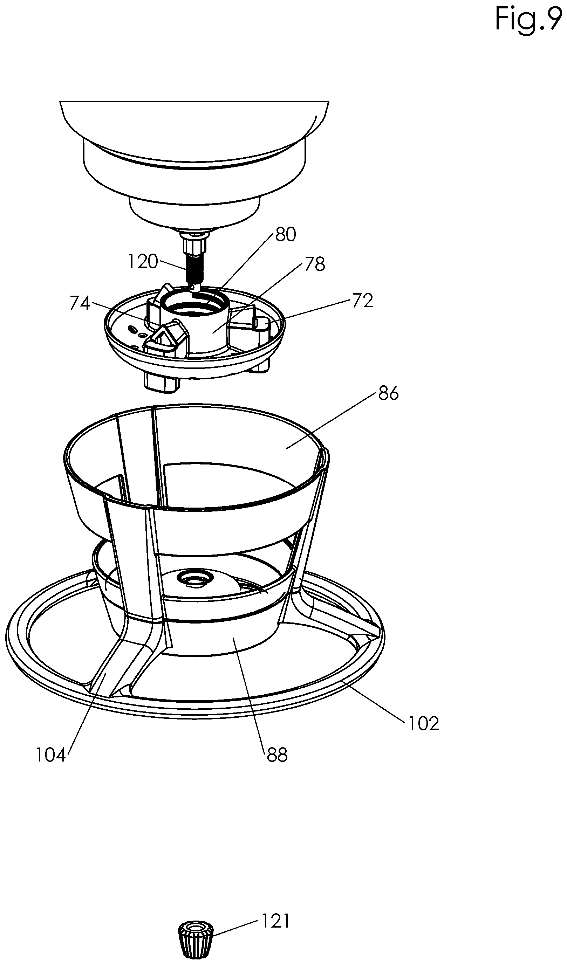

Figure 9 is a partially exploded view of the bottom portion of the bird feeder;

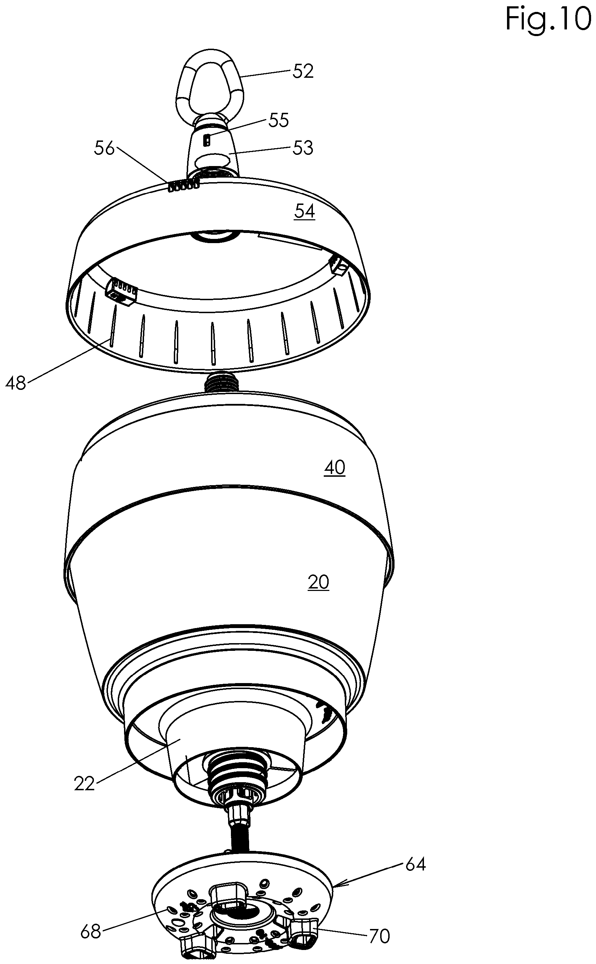

Figure 10 is a bottom perspective view of the bird feeder without the shroud;

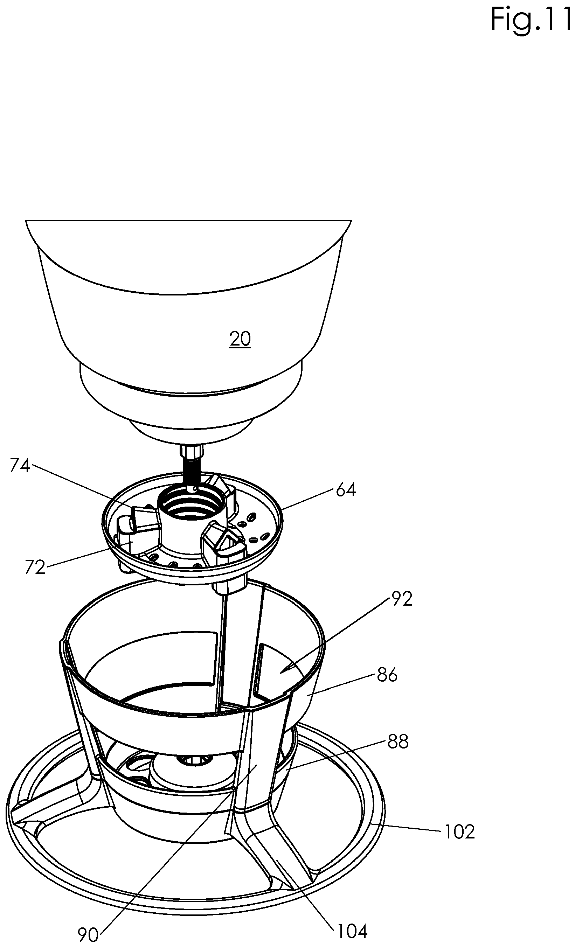

Figure 11 is a perspective view of the bottom portion of the feed container illustrating the shroud and seed tray;

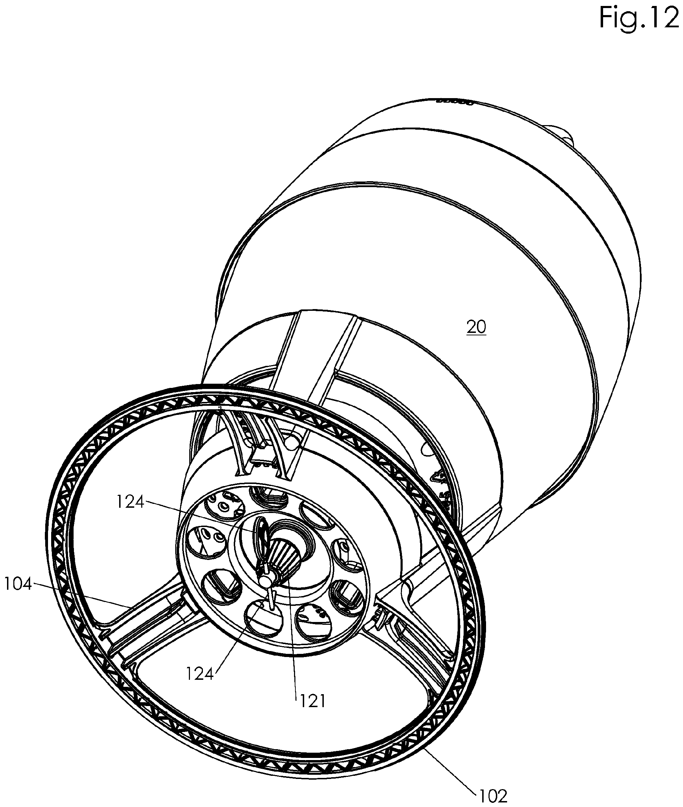

Figure 12 is a bottom perspective view of the bird feeder;
Figure 13 is a perspective view of the spring cartridge;

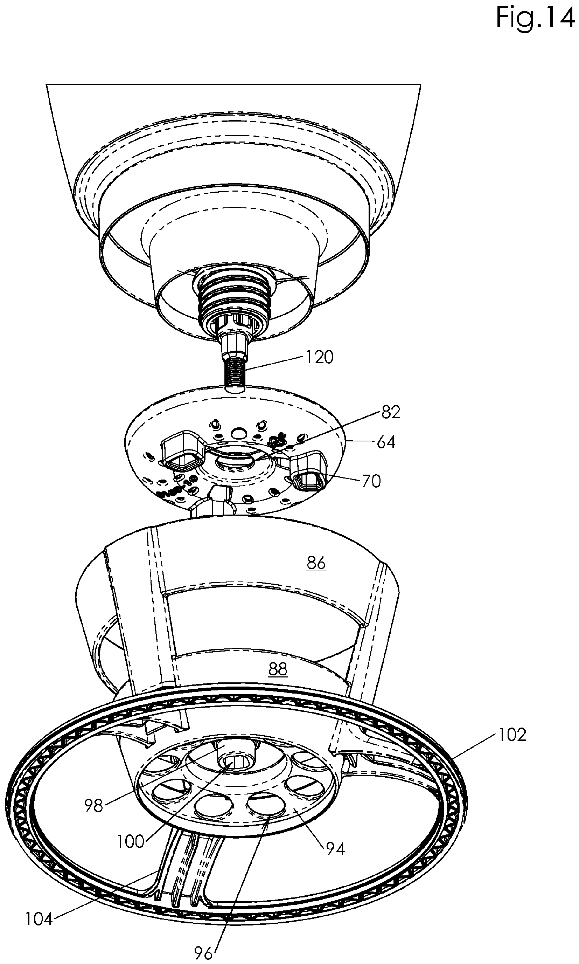

Figure 14 is a partially exploded view of the bottom portion of the bird feeder;

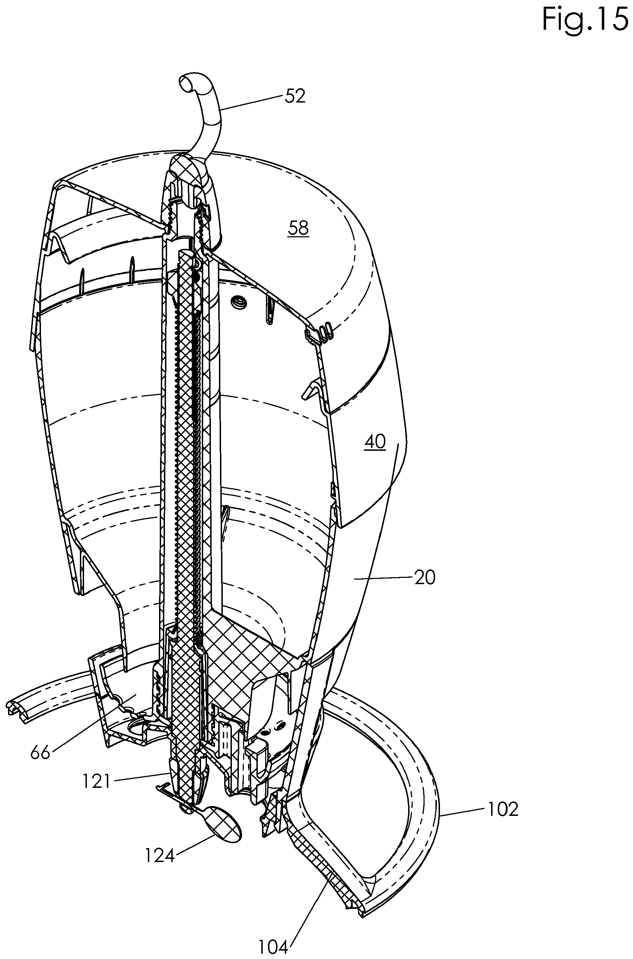

Figure 15 is a perspective sectional view of the bird feeder;

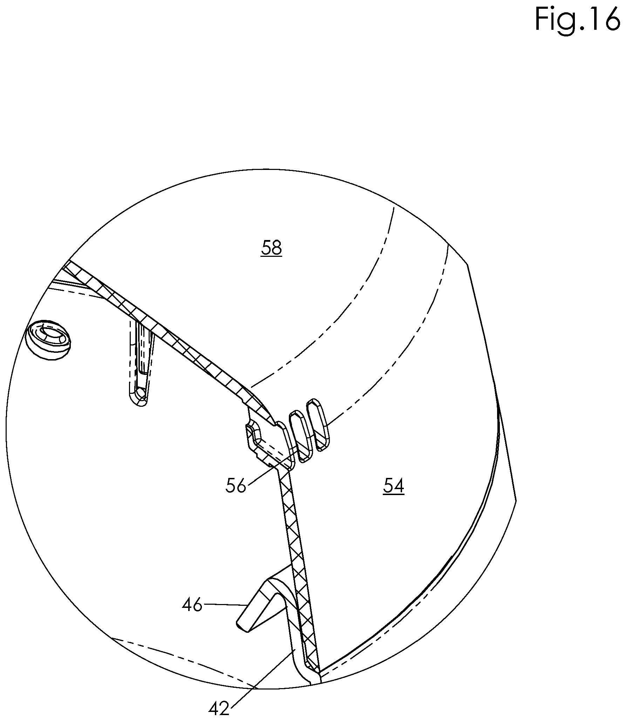

Figure 16 is a sectional view illustrating a portion of the cover and securement thereof;

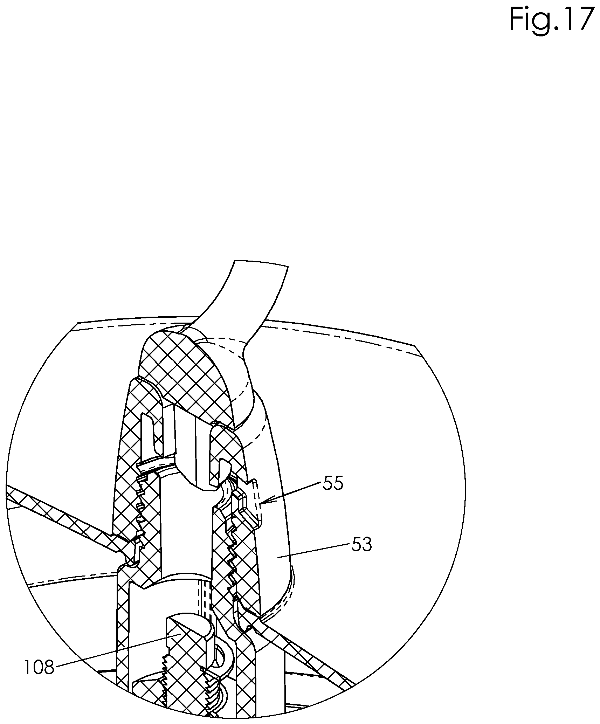

Figure 17 is a partial sectional view illustrating the hanger and attachment thereof to the spring cartridge;

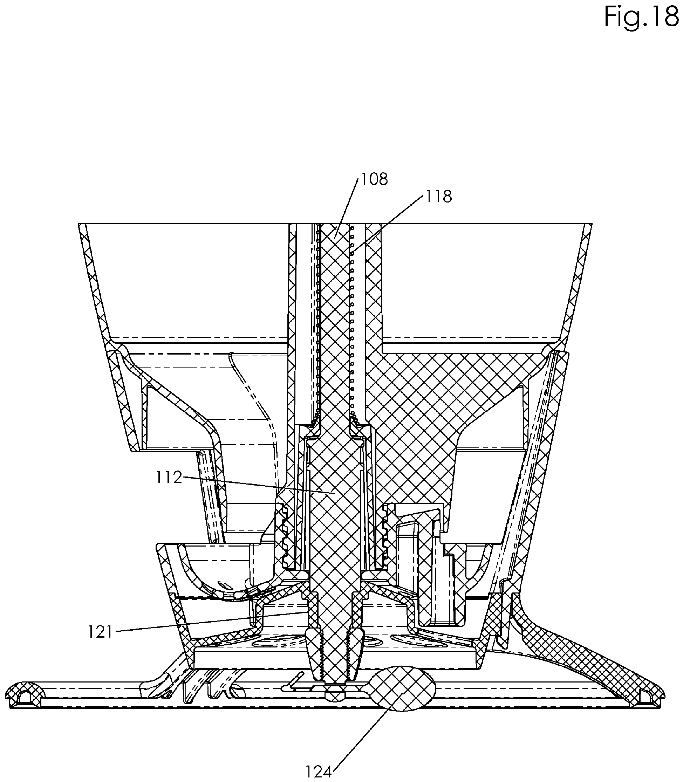

Figure 18 is a side sectional view of the bottom portion of the feed container;

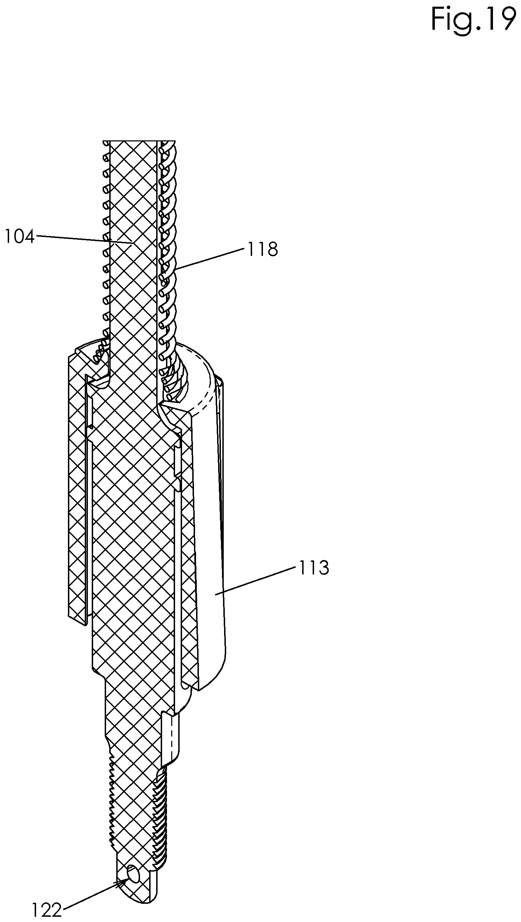

Figure 19 is a sectional view of a portion of the spring cartridge in a normal unstressed position;

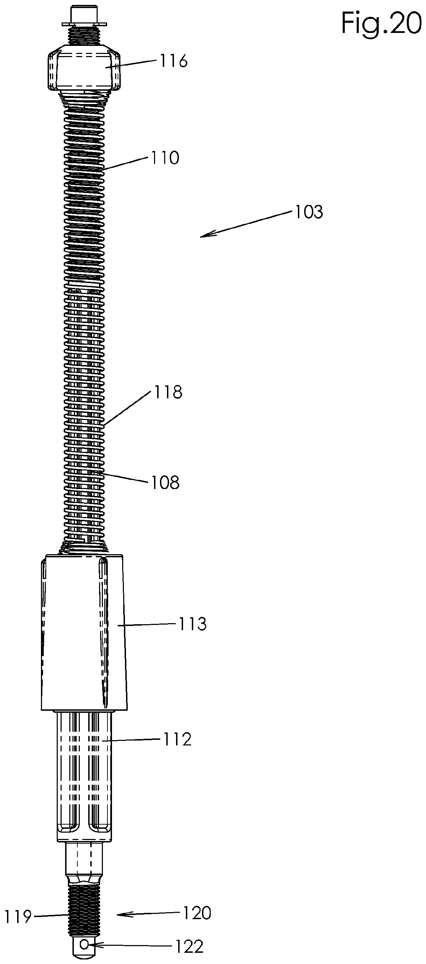

Figure 20 is a side view of the spring cartridge when pressure is exerted thereon;

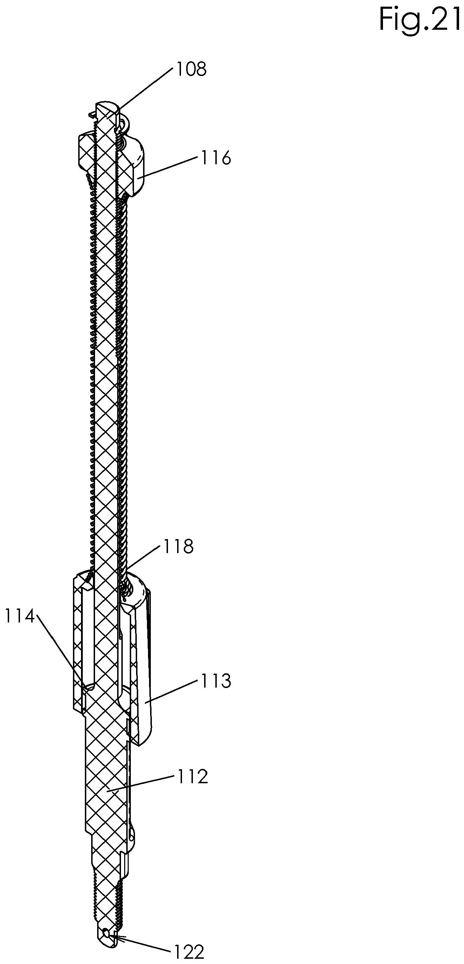

Figure 21 is a sectional view thereof;

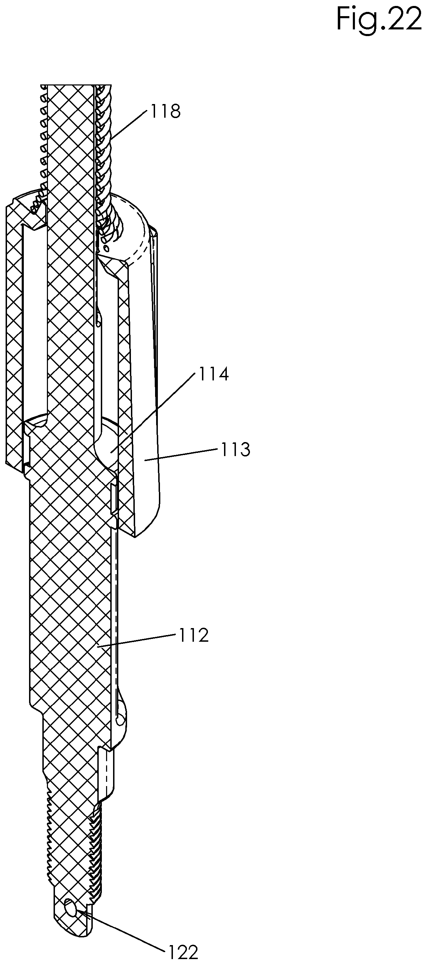

Figure 22 is an enlarged view illustrating operation of the spring; and
Figure 23 is a side elevational view of the bird feeder mounted on a member.

### DETAILED DESCRIPTION OF THE INVENTION

Referring to the drawings in greater detail and by reference characters thereto, there is illustrated a bird feeder which is generally designated by reference numeral 8. Bird feeder 8 includes a cover generally designated by reference numeral 10, a hook structure generally designated by reference numeral 12, an upper body generally designated by reference numeral 14, a seed container generally designated by reference numeral 16, and a shroud generally designated by reference numeral 18.

Seed container 16 is defined by a side wall 20. A lower section generally designated by reference numeral 22 has an inwardly tapering wall 23 terminating in a generally circular outline 25. Portion 25 surrounds a seed outlet 24 and assists in preventing access to the feeder when the shroud is closed.

A center tube 26 has an interior passageway or cavity 28. Center tube 26 is preferably molded integrally with seed container 16 and has reinforcing flanges 30. At the upper edge of side wall 20 there are provided pairs of slits 32 to define a tab 34. A centrally located aperture 36 is formed in each tab 34.

Upper body 14 is comprised of a side wall 40 which communicates with an upper wall section 42. A ledge 44 is formed intermediate side wall 40 and upper wall section 42. Upper wall section 42 continues on to form a diagonally inwardly extending wall 46. A plurality of linear protrusions 48 are sized such that they abut the top of side wall 20 when upper body 14 is placed in position. There are also provided circular protrusions 50 which are designed to mate with apertures 36 formed in tabs 34.

Cover 10 is designed to seat on top of upper body 14. Cover 10 has a side wall 54 with venting apertures 56 formed therein. Side wall 54 seats on ledge 44. Cover 10 also includes a top wall 58 having a central aperture 60 located therein. The portion around central aperture 60 is textured for reasons which will become apparent hereinbelow.

Hook structure 12 includes a hook element 52 which will function to permit the bird feeder to be hung. There is also an engaging portion 53; hook element 52 is rotatable with respect to engaging portion 53 and has interior threads formed thereon. Ventilation apertures 55 are provided to vent center tube 26.

A seed tray 64 has a bottom wall 66 with drainage apertures 68 formed therein. Seed tray 64 sits below seed container 16 to receive seeds thereon. Seed tray 64 includes legs 70 which continue on the upper side as projections 72. Each projection 72 has an inverted V-shaped surface 74 to distribute the seed.

Seed tray 64 also includes, on the upper side thereof, a center wall 78 having threads 80 formed internally thereof. There is also provided a central aperture 82.

Shroud 18 has a solid upper side wall 86 and a solid lower side wall 88. Upper side wall 86 and lower side wall 88 are connected by vertical elements 90 with openings 92 being therebetween. Shroud 18 also has a bottom wall 94 with relatively large apertures 96 located therein. A center structure 98 includes a rectangular aperture 100 therein. A circular perch 102 is connected to lower side wall 88 by connecting members 104.

A spring cartridge 103 is located interiorly of center tube 26 and includes a center rod 108. Center rod 108 has threads 110 on an upper portion thereof. The lower portion includes a base 112 which is surrounded by a moveable cap 113. Cap 113 sits on a top wall 114 of base 112. Base 112 is thicker and thus provides reinforcement when the shroud is in the closed position.

A nut 116 is engageable with threads 110 and a coil spring 118 surrounds center rod 108 between nut 116 and cap 113.

Center rod 108 includes a bottom extension generally designated by reference numeral 120. The bottom extension 120 includes threads 119 thereon for engagement with a nut 121. An aperture 122 is designed to receive a pin 124.

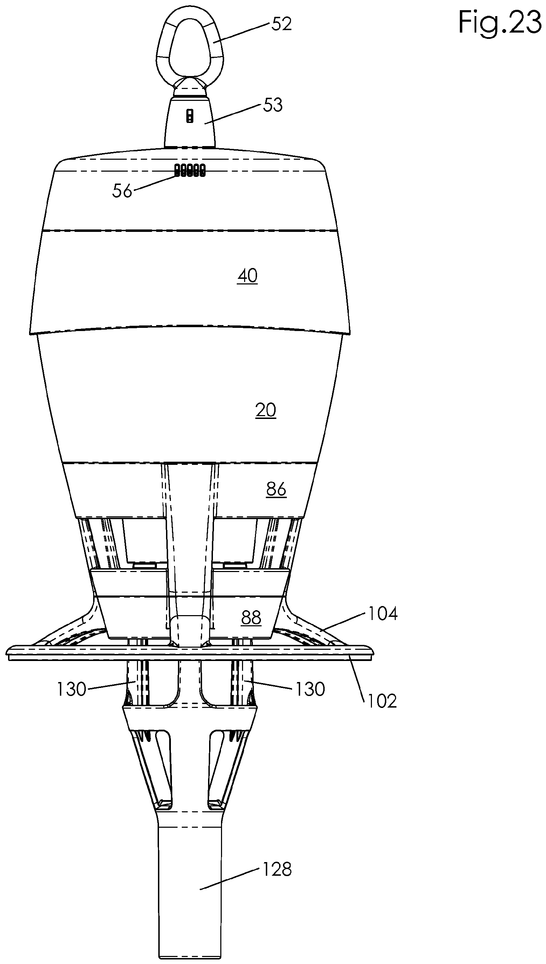

If desired, the bird feeder 8 can also be supported by a pole. Thus, as shown in Figure 23, a post 128 may have a plurality of arms 130 which would extend into and through apertures 96 in shroud 84.

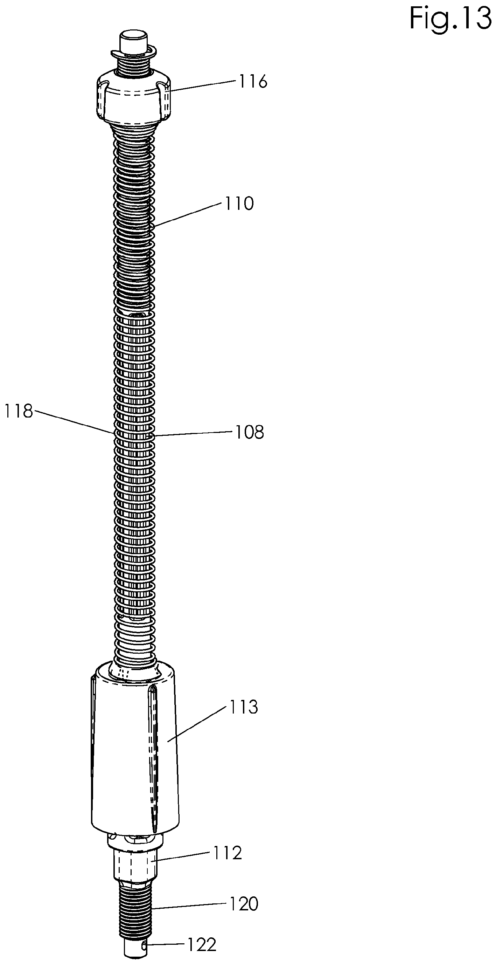

In assembly, the cartridge subassembly shown in Figure 13 may be assembled and then bench tested to have the desired degree of tension. This is done by adjusting nut 116 as required.

Subsequently, upper body 14 may then be assembled with seed tray 16. The cartridge assembly would then be put into center tube 26. Seed tray 64 would then be screwthreadedly engaged with seed container 16. Shroud 18 may then be placed in position and held therein by nut 121 with pin 124 being placed in position. Cover 10 would then be placed in position and would be held in place by screwthreaded engagement of engagement portion 53.

The above arrangement permits adjustment, if required, of the tension of spring 118. Thus, rotation of the perch will cause rotation of the center rod 108 and permit the user to adjust the tension and thereby permit or deny access of a certain weight on the perch.

It will be understood that the above described embodiment is for purposes of illustration and that changes and modifications may be made thereto without departing from the scope of the invention.

## Claims

1. A bird feeder (8) comprising:
a seed container (16);
a center tube (26) within said seed container;
a seed tray (64);
a cover (10), said cover having an aperture, said center tube passing through said aperture;
a hanger (12), said hanger being engaged with an upper portion of said center tube (26) to thereby retain said cover (10) in position;
**characterized in that** said bird feeder has a cartridge spring assembly (103) comprising a center rod, (108) a spring (118) extending about said center rod 108, said spring assembly fitting within said center tube (26) and said center rod (108) extending outwardly at a lower end thereof;
a shroud (18) having a perch member (102), said shroud and said spring assembly being attached; and
a retainer (124) secured to said lower end of said spring assembly to retain said shroud in position.

2. The bird feeder of Claim 1 wherein said seed tray (64) is screwthreadedly engaged with said seed container (16).

3. The bird feeder of Claim 1 wherein said center rod (108) is rotatable with respect to said center tube to permit adjustment of spring tension.

4. The bird feeder of Claim 1 wherein said cover (10) has ventilation apertures formed therein, said ventilation apertures (56) communicating with said seed container, said seed tray having ventilation apertures formed therein, said ventilation apertures communicating with said seed container.

5. The bird feeder of Claim 3 wherein an interior surface of said center tube has longitudinal flanges formed thereon to prevent rotation of said cartridge spring assembly (103) with respect to said center tube (26).

6. The bird feeder of Claim 2 wherein said perch (102) is circular.

7. The bird feeder of Claim 1 wherein an upper surface of said cover (10) is textured proximate said aperture to provide friction between said hanger (12) and said cover (10).

8. The bird feeder of Claim 1 wherein said seed tray (64) includes a plurality of drainage apertures (68) formed therein.

9. The bird feeder of Claim 1 wherein said spring (118) is tensioned between upper and lower stops to hold the spring under tension.

10. The bird feeder of Claim 1 wherein said hanger includes ventilation apertures (55) therein to provide ventilation for said cartridge spring assembly (103).

11. The bird feeder of Claim 1 wherein said seed container comprises an upper body portion and a lower body portion (22), said lower body portion (22) having an outer wall (23) tapering inwardly and downwardly, said upper body portion (14) having an outer wall tapering inwardly and upwardly.

12. A method of manufacturing a bird feeder according to anyone of claims 1 to 11 comprising the step of preassembling a spring cartridge and testing said spring cartridge to ensure that the spring is calibrated to a desired tension.

## Patentansprüche

1. Vogelfutterspender (8), umfassend:
einen Samenbehälter (16);
eine Mittelsäule (26) innerhalb des Samenbehälters;
eine Samenschale (64);
eine Abdeckung (10), wobei die Abdeckung eine Öffnung aufweist, wobei die Mittelsäule die Öffnung durchdringt;
einen Hänger (12), wobei der Hänger mit einem oberen Abschnitt der Mittelsäule (26) in Eingriff ist, um die Abdeckung (10) dadurch in Position zu halten;
**dadurch gekennzeichnet, dass** der Vogelfutterspender eine Kassettenfederanordnung (103) aufweist, umfassend eine Mittelstange (108), wobei sich eine Feder (118) um die Mittelstange (108) erstreckt, wobei die Federanordnung in die Mittelsäule (26) passt und sich die Mittelstange (108) an einem unteren Ende davon nach außen erstreckt;
eine Hülle (18), die ein Sitzstangenelement (102) aufweist, wobei die Hülle und die Federanordnung verbunden sind; und
eine Halterung (124), die an dem unteren Ende der Federanordnung befestigt ist, um die Hülle in Position zu halten.

2. Vogelfutterspender nach Anspruch 1, wobei die Samenschale (64) über ein Schraubgewinde mit dem Samenbehälter (16) in Eingriff steht.

3. Vogelfutterspender nach Anspruch 1, wobei die Mittelstange (108) in Bezug auf die Mittelsäule drehbar ist, um eine Anpassung der Federspannung zuzulassen.

4. Vogelfutterspender nach Anspruch 1, wobei die Abdeckung (10) darin ausgebildete Lüftungsöffnungen aufweist, wobei die Lüftungsöffnungen (56) mit dem Samenbehälter in kommunizierender Verbindung stehen, wobei die Samenschale darin ausgebildete Lüftungsöffnungen aufweist, wobei die Lüftungsöffnungen mit dem Samenbehälter in kommunizierender Verbindung stehen.

5. Vogelfutterspender nach Anspruch 3, wobei eine Innenfläche der Mittelsäule darauf ausgebildete Längsflansche aufweist, um eine Drehung der Kassettenfederanordnung (103) in Bezug auf die Mittelsäule (26) zu verhindern.

6. Vogelfutterspender nach Anspruch 2, wobei die Sitzstange (102) kreisförmig ist.

7. Vogelfutterspender nach Anspruch 1, wobei eine obere Oberfläche der Abdeckung (10) nahe der Öffnung strukturiert ausgebildet ist, um Reibung zwischen dem Hänger (12) und der Abdeckung (10) bereitzustellen.

8. Vogelfutterspender nach Anspruch 1, wobei die Samenschale (64) mehrere darin ausgebildete Abflussöffnungen (68) umfasst.

9. Vogelfutterspender nach Anspruch 1, wobei die Feder (118) zwischen oberen und unteren Anschlägen gespannt ist, um die Feder unter Spannung zu halten.

10. Vogelfutterspender nach Anspruch 1, wobei der Hänger Lüftungsöffnungen (55) darin umfasst, um Lüftung für die Kassettenfederanordnung (103) bereitzustellen.

11. Vogelfutterspender nach Anspruch 1, wobei der Samenbehälter einen oberen Körperabschnitt und einen unteren Körperabschnitt (22) umfasst, wobei der untere Körperabschnitt (22) eine Außenwand (23) aufweist, die sich nach innen und unten verjüngt, wobei der obere Körperabschnitt (14) eine Außenwand aufweist, die sich nach innen und oben verjüngt.

12. Verfahren zur Herstellung eines Vogelfutterspenders nach einem der Ansprüche 1 bis 11, das den Schritt des Vormontierens einer Federkassette und Prüfen der Federkassette umfasst, um sicherzustellen, dass die Feder auf eine gewünschte Spannung kalibriert ist.

## Revendications

1. Mangeoire pour oiseaux (8) comprenant :
un récipient à graines (16) ;
un tube central (26) à l'intérieur dudit récipient à graines ;
un plateau à graines (64) ;
un couvercle (10), ledit couvercle ayant une ouverture, ledit tube central passant à travers ladite ouverture ;
un élément de suspension (12), ledit élément de suspension étant en prise avec une partie supérieure dudit tube central (26) afin de maintenir de la sorte ledit couvercle (10) en position ;
**caractérisée en ce que** ladite mangeoire pour oiseaux a un ensemble de cartouche à ressort (103) comprenant une tige centrale (108), un ressort (118) s'étendant autour de ladite tige centrale (108), ledit ensemble à ressort s'ajustant à l'intérieur dudit tube central (26) et ladite tige centrale (108) s'étendant vers l'extérieur à une extrémité inférieure de celui-ci ;
une enveloppe (18) ayant un élément de perchoir (102), ladite enveloppe et ledit ensemble à ressort étant attachés ; et
un élément de retenue (124) fixé à ladite extrémité inférieure dudit ensemble à ressort pour maintenir ladite enveloppe en position.

2. Mangeoire pour oiseaux selon la revendication 1, dans laquelle ledit plateau à graines (64) est en prise par raccord à vis avec ledit récipient (16).

3. Mangeoire pour oiseaux selon la revendication 1, dans laquelle ladite tige centrale (108) est rotative par rapport audit tube central pour permettre l'ajustement d'une tension de ressort.

4. Mangeoire pour oiseaux selon la revendication 1, dans laquelle ledit couvercle (10) a des ouvertures de ventilation formées dans celui-ci, lesdites ouvertures de ventilation (56) communiquant avec ledit récipient à graines, ledit plateau à graines ayant des ouvertures de ventilation formées dans celui-ci, lesdites ouvertures de ventilation communiquant avec ledit récipient à graines.

5. Mangeoire pour oiseaux selon la revendication 3, dans laquelle une surface intérieure dudit tube central a des bords longitudinaux formés sur celle-ci pour empêcher la rotation dudit ensemble de cartouche à ressort (103) par rapport audit tube central (26).

6. Mangeoire pour oiseaux selon la revendication 2, dans laquelle ledit perchoir (102) est circulaire.

7. Mangeoire pour oiseaux selon la revendication 1, dans laquelle une surface supérieure dudit couvercle (10) est texturée à proximité de ladite ouverture pour fournir une friction entre ledit élément de suspension (12) et ledit couvercle (10).

8. Mangeoire pour oiseaux selon la revendication 1, dans laquelle ledit plateau à graines (64) comprend une pluralité d'ouvertures de drainage (68) formées dans celui-ci.

9. Mangeoire pour oiseaux selon la revendication 1, dans laquelle ledit ressort (118) est tendu entre des arrêts supérieur et inférieur pour maintenir le ressort sous tension.

10. Mangeoire pour oiseaux selon la revendication 1, dans laquelle ledit élément de suspension comprend des ouvertures de ventilation (55) dans celui-ci pour fournir une ventilation pour ledit ensemble de cartouche à ressort (103).

11. Mangeoire pour oiseaux selon la revendication 1, dans laquelle ledit récipient à graines comprend une partie de corps supérieure et une partie de corps inférieure (22), ladite partie de corps inférieure (22) ayant une paroi extérieure (23) s'amenuisant vers l'intérieur et le bas, ladite partie de corps supérieure (14) ayant une paroi extérieure s'amenuisant vers l'intérieur et vers le haut.

12. Procédé de fabrication d'une mangeoire pour oiseaux selon l'une quelconque des revendications 1 à 11, comprenant l'étape de pré-assemblage d'une cartouche à ressort et de test de ladite cartouche à ressort pour garantir que le ressort soit calibré à une tension souhaitée.
